# EUROPEAN PATENT APPLICATION

(11) **EP 3 400 794 A1**
(43) Date of publication of application: **14.11.2018**
(21) Application number: 18171714.1
(22) Date of filing: 10.05.2018
(51) Int. Cl.: A01K 27/00

(54) **PET HARNESS**

(30) Priority: 10.05.2017 IT 201700050745
(71) Applicant: Cortina Pet Soul S.r.l., 31100 Treviso (IT)
(72) Inventor: RICCHI, Paolo, 31100 Treviso (IT); BRUSATIN, Dario, 31100 Treviso (IT); CINQUEGRANI, Attilio, 31100 Treviso (IT)
(74) Representative: Zamprogno, Bruno

(57) **Abstract**

A domestic pets harness (1) comprising a pair of plate like side elements (2) designed to be arranged in contact with the upper part of the shoulder of the animal, a front strap (3) which extends from one plate like side element (2) to the other, so as to secure the front part of the animal, a ventral strap (4) which extends from one plate like side element (2) to the other, so as to wrap up the ventral part of the animal; and a connection device (5) which is placed above the dorsal region of the animal and is structured to connect one plate like side element (2) to the other. Each end of the front strap (3) and the ventral strap (4) is separately connected to the corresponding plate like side element (2) by means of a respective joining ring (6) (7).

## Description

### PRIORITY CLAIM

*This application claims priority from Italian Patent Application No.* 102017000050745 *filed on 10*/*05*/*2017*

This patent application relates to a pet harness.

In particular, this invention concerns a pet harness to walk a pet on a leash, such as for example a cat or a dog, to which explicit reference will be made in the description below without because of this loosing in generality.

As it is known dog harnesses consist of a piece of equipment worn by a dog, so as to keep the dog under control not only from the neck, but also from the chest and the central part, and is designed to be connected to a leash, so as to walk the dog outdoors.

Some types of dog harnesses generally comprise a front strap, which extends so as to secure the front portion of the dog present immediately under the neck, usually the chest, and a ventral strap, which surrounds the ventral part of the animal so as to wrap it up in the area immediately behind the front legs thereof.

The ends of each strap are further steadily connected to the corresponding ends of the other strap in the area of respective central joining areas, which, in use, rest against opposite sides of the dog, usually in the upper part of the thorax or of the shoulder slightly under the back.

The two central joining portions are further connected to one another by means of an upper connection device, which is generally provided, in turn, with an upper closing strap, which extends above the back of the dog transversely to the upper line thereof so as to connect the two central joining portions to one another; with an adjusting device, which his structured so as to adjust the length of the upper closing strap, so that the two central joining portions can approach one another and tighten the harness on the back of the dog, thus closing it; and a connection device, for example an upper ring, which can be connected to the leash.

A drawback of the harnesses described above lies in the fact that the front and ventral straps are arranged in positions that are angularly fixed relative to one another, as they are firmly joined in the central joining portion through seams or heat-welded joints. This structure turns out to be particularly "rigid" and does not completely adjusts to the body of the dog during the movement thereof. Indeed, during the movement of the dog, the displacement of one of the two straps, for example the one that, in a given moment, is exerting the greater compression upon the body of the animal, can cause the displacement of the other strap, which, for example is temporarily loosened, to a position of contact with the body of the dog that is different from the optimal contact position.

The angular displacements of the straps further cause a swivelling of the side joining portions, which scrape against the body of the dog, thus provoking a progressive reduction of the hair of the dog located in the points of contact, usually the sides.

Therefore, the Applicant carried out an in-depth analysis of pet harnesses, aimed at identifying a simple and economic solution that allows manufacturers to specifically reach the object of increasing the ability of the harness to be form-fitting and adjust to the body of the dog and, at the same time, reduces the extent of scraping of the harness itself against the body of the dog.

The invention will now be described with reference to the accompanying drawings, showing a non-limiting embodiment thereof, wherein:
- Figure 1 is a schematic perspective view, with parts represented on a larger scale, of a pet harness worn by a dog according to the invention;
- Figure 2 shows a portion of the pet harness shown in Figure 1;
- Figure 3 is a perspective side view of the closed pet harness shown in Figure 1;
- Figure 4 is a perspective top view of the closed per harness shown in Figure 1;
- Figure 5 is a perspective bottom view of the closed per harness shown in Figure 1;
- Figures 6 and 7 are perspective views of a strap of the pet harness in two respective operating conditions.

The invention will now be described in detail with reference to the accompanying Figures, so as to allow a person skilled in the art to carry it out and to use it. Possible changes to the embodiments described will be immediately evident to skilled people and the generic principles described can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the principles and the features described and claimed herein.

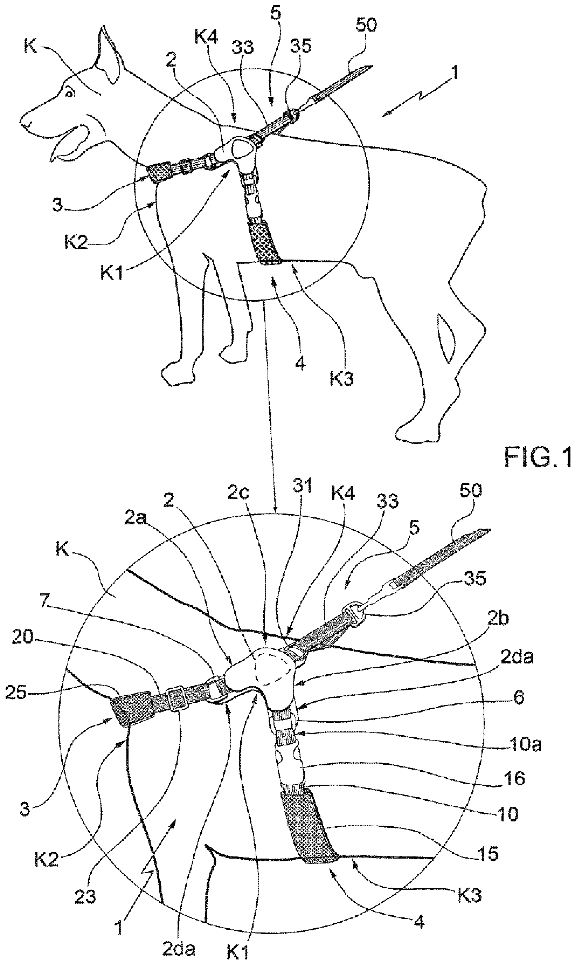

With reference to Figures 1 to 7, number 1 indicates, as a whole, a harness for pets, such as for example a cat, preferably a dog or any other type of similar pet.

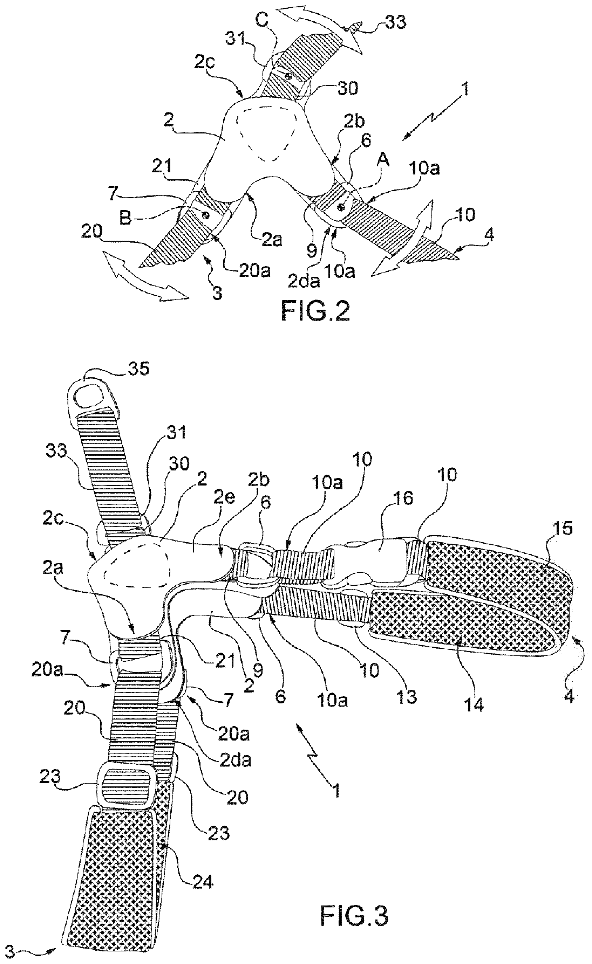

According to a preferred embodiment shown in Figures 1 and 2, the harness 1 is designed to be connected to a lead 50 of the animal K and comprises: a pair of plate like side elements 2, which are designed to be respectively arranged so as to rest against/be in contact with the upper part K1 of the two opposite shoulders of the animal K; a front strap 3, which extends from a plate like side element 2 to the other one so as to secure the front part K2 of the animal; and a ventral strap 4, which extends from a plate like side element 2 to the other one so as to secure the ventral part K3 of the animal K.

Obviously, the front part K2, which, in use, is surrounded by the front strap 3, corresponds to the region of the animal (for example, the dog shown in the Figures) approximately extending between the lower part of the neck and the upper part of the chest; the ventral part K3, which, in use, is surrounded by the ventral strap 4, approximately corresponds to the region of the abdomen in the part immediately behind the front legs; and the upper part K1 of the opposite shoulders is approximately adjacent to the back region of the animal.

According to a preferred embodiment, the harness further comprises a connection means 5, which, in use, is arranged above the dorsal region K4 of the animal K and is structured to connect a plate like side element 2 to the other plate like side element 2 so as to tighten and close the harness 1 on the dorsal region K4 of the animal K.

According to a preferred explanatory embodiment, each plate like side element 2 can have an approximately triangular shape and has two lower vertexes 2a and 2b and an upper vertex 2c, which are conveniently rounded.

According to a preferred explanatory embodiment, the ventral strap 4 comprises a thin band or tape 10 with predetermined width and length, which extends between the two plate like side elements 2. Preferably, the tape 10 is made of a flexible material, for example with fabric and/or elastic material or the like. Each longitudinal end 10a of the tape 10 can be separately connected, by means of a corresponding joining ring 6, to the lower vertex 2b of the plate like side element 2, facing backwards, namely on the side opposite the part K2 of the animal K. Preferably, each end 10a of the tape 10 can be connected to the ring 6 in a sliding manner, so as to allow the ventral strap 4 to freely swivel relative to the respective plate like side element 2 around an approximately horizontal axis A (schematic Figure 2) .

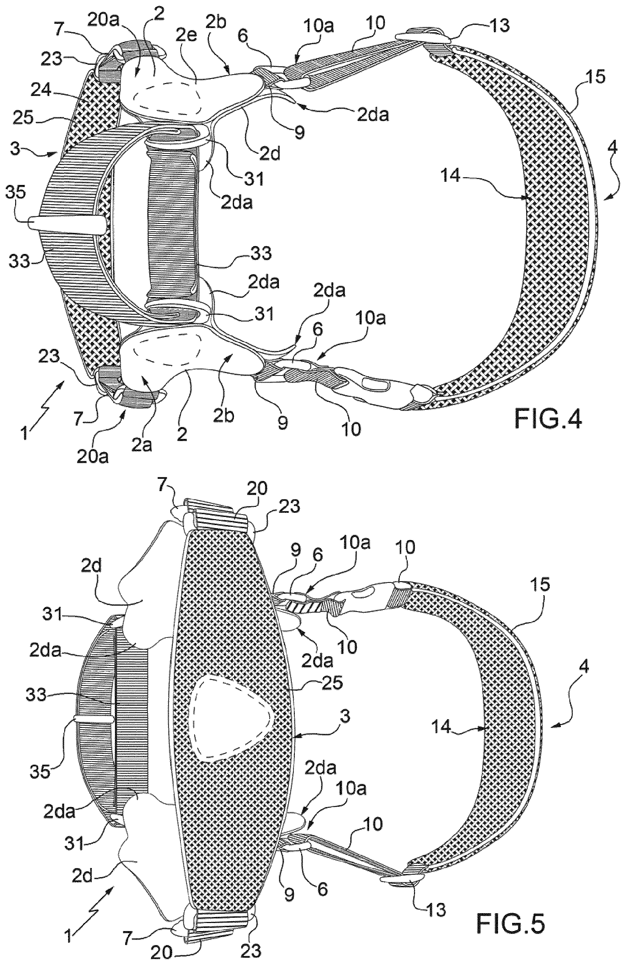

With reference to Figure 4, each end 10a of the tape 10 can preferably go through the ring 6 and be folded onto itself in a U-shape, so that it is firmly closed in its end part, so as to form a loop which is engaged, on the inside, by the ring 6 in a sliding manner.

According to a preferred explanatory embodiment shown in Figures from 1 to 7, each joining ring 6 can further be connected, on the opposite side relative to the loop, to the lower vertex 2b of the plate like side element 2 through a strip portion 9. The strip portion 9 can have an end firmly connected to the relative lower vertex 2b of the plate like side element 2, preferably through seams or heat-welded joints or the like, whereas the opposite end of the strip portion 9 forms a closed buttonhole, which is engaged in a sliding manner by the portion of the ring 6 approximately opposite the portion of the ring 6 engaged by the end 10a of the tape 10.

According to a preferred embodiment, the ventral strap 4 can further comprise an adjusting buckle 13, which can slide on the tape 10 and is structured to adjust the length thereof.

Preferably, the adjusting buckle 13 can be engaged by the two branches forming the U-folded portion of the end 10a of the tape 10 and is designed to slide along them so as to adjust the length of the strap 4.

The central portion of the tape 10 extending between the two ends 10a can further be covered with a protection layer 14 of soft material, which is designed to be interposed, in use, between the inner surface of the tape 10 and the body of the animal. Preferably, the soft material can comprise one or more strips of fabric, preferably - though not necessarily - an elastic, soft, conveniently mesh-like or perforated fabric. According to a preferred explanatory embodiment, the protection layer 14 can be a part of a sheath or case or protection sleeve 15, which is fitted on the tape 10 so as to cover it at least in the portion that is going to come into contact with the animal.

Preferably, on the intermediate segment of the tape 10, preferably, though not necessarily, on the opposite side relative to the segment accommodating the adjusting buckle 13, there can further be a snapping closing device 16 preferably comprising a snapping buckle or any other similar device designed to manually open/close the central strap 4.

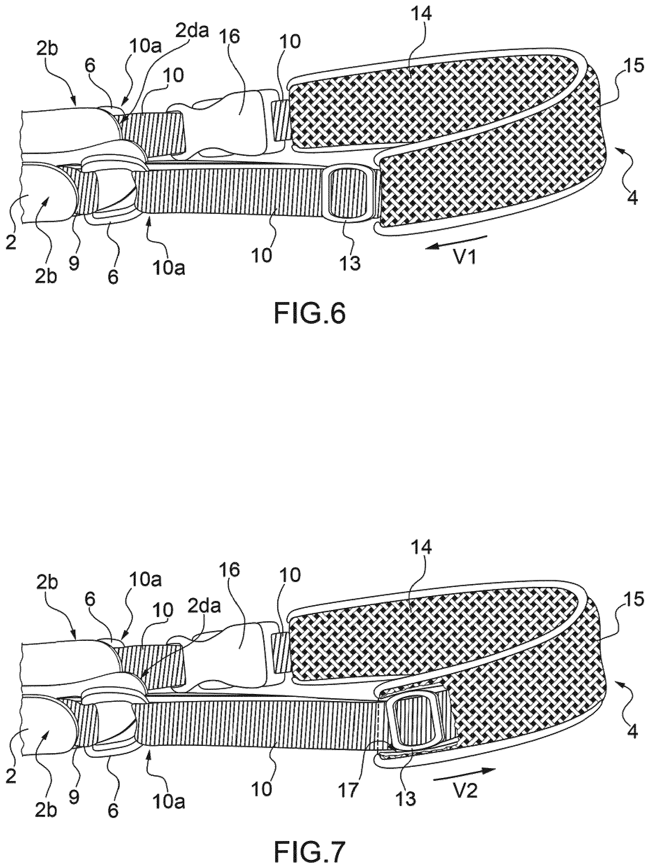

With reference to Figures 6 and 7, an inner pocket 17, which is structured and sized to house the adjustment buckle 13 so as to hide it, can be obtained at at least one end of the protection sleeve 15. Preferably, the protection sleeve 15 can be firmly connected to the tape 10, whereas the buckle 13 can be caused to slide along the tape 10, for example in the direction V2 (Figure 7) during the length adjusting operation, towards the sleeve 15 until it engages the pocket 17, thus being hidden inside it.

Obviously, the protection sleeve 15 can be fitted on the tape 10 in a sliding manner and, in use, its longitudinal sliding movement, for example along the direction VI (Figure 6), can allow the buckle 13 to engage the end of the sleeve in a hidden configuration.

As far as the front strap 3 is concerned, on the other hand, it comprises a thin tape 20 with a predetermined length, preferably smaller than the length of the tape 10. The tape 20 extends between the two plate like side elements 2 and can be made of a flexible material, for example a plastic material or the like. Each longitudinal end 20a of the tape 20 can be separately connected, by means of a corresponding joining ring 7, to the lower vertex 2a of the plate like side element 2, facing forwards, namely towards the part K2 of the animal K. Preferably, each end 20a of the tape 20 can be connected to the ring 7 in a sliding manner, so as to allow the front strap 3 to freely swivel relative to the respective plate like side element 2 and relative to the front strap 3 around an approximately horizontal axis B spaced apart from the swivelling axis A of the ventral strap 4.

Preferably, each end 20a of the tape 20 can go through the corresponding ring 7 and be folded onto itself in a U-shape, so that it is firmly closed in its end part, so as to form a loop which is engaged, on the inside, by the ring 7 in a sliding manner.

Each joining ring 7 is further be connected, on the opposite side relative to the loop, to the lower vertex 2a of the plate like side element 2 through a strip portion 21. The strip portion 21 can have an end firmly connected to the relative lower vertex 2a of the plate like side element 2, preferably through a seam or a heat-welded joint or similar fixing systems, whereas the opposite end forms a closed buttonhole, which is engaged by the ring 7 in a sliding manner.

According to a preferred embodiment, the front strap 3 can further comprise a pair of adjusting buckles 23, each mounted so as to slide on the tape 20 and structured to adjust the length thereof. Preferably, each adjusting buckle 23 can slide on a folded end segment of the end 20a and on the adjacent intermediate branch of the tape 20.

The central portion of the tape 20 can further be covered with a protection layer 24 of soft material, which is designed to be interposed, in use, between the inner surface of the tape 20 and the body of the animal. Preferably, the soft material can comprise one or more strips of fabric, preferably - though not necessarily - an elastic, soft, conveniently mesh-like or perforated fabric. Preferably, the protection layer 24 can be part of a sheath or protection sleeve 25, which is fitted on the tape 20 so as to cover it at least in the portion that is going to come into contact with the animal. An inner pocket (not shown), which is structured and sized to house the relative adjustment buckle 23 so as to hide it, can be obtained at each end of the protection sleeve 25. Obviously, the protection sleeve 25 can be sized and fitted in a sliding manner on the tape 20 and, in use, its longitudinal movement on the latter can cause the buckle 23 to be engaged inside it so as to be hidden.

Each plate like side element 2 can be made of a soft flexible material, for example leather or fabric or the like, and it can advantageously comprise a thin inner sheet or layer 2d, which is designed to be arranged in contact with the body of the animal, and an outer layer 2e, which overlaps the inner layer 2d and is firmly connected to the latter so as to trap the strip portions 9 and 21 in the relative vertexes 2a and 2b. Preferably, the inner layer 2d has, in the area of each lower vertex 2a and 2b, two extensions towards the rings 6 and 7, which define respective flexible protection flaps (or tongues) 2da, which are interposed between the corresponding joining rings 6 and 7 and the body of the animal.

The Applicant fount out that the two protection flaps 2da allow manufacturers to limit the scraping of the joining rings 6 and 7 against the animal and, therefore, conveniently eliminate the local hair reduction.

According to a preferred embodiment, at the upper vertex 2c of each plate like side element there further is firmly fixed the end of a strip portion 30, whose opposite end is shaped so as to form an eyelet engaged by an upper ring 31 in a sliding manner.

According to a preferred embodiment, the connection device 5 comprises an upper strap 33, which extends above the back of the animal transversely thereto between the two plate like side elements 2 and goes through the two rings 31 and a ring 35, to which the lead 50 is connected.

The upper strap 33 conveniently is engaged by the ring 31 so as to allow the lead to swivel around an approximately horizontal axis C, which is separate and spaced apart from the axes A and B.

The advantages of the pet harness described above are the following. The four joining rings, which are connected in pairs in the front part of the two plate like side elements and in the rear part thereof, respectively, allow each strap to be capable of freely swivelling relative to the plate like side elements independently of the other strap. Furthermore, the use, in a same plate like side element, of two joining rings facing one another and spaced apart from one another allows the swivelling axis of each strap to be fixed in the position that is most suitable for the displacements to which it is subjected during the movement of the region secured by it. In other words, the use of four rings to separately and respectively connect the four ends of the straps to the two plate like side elements allows the front strap to swivel around a first axis approximately arranged close to the front part of the dog and, at the same time, allows the ventral strap to freely swivel around the second axis, appropriately spaced apart from the first axis, so that, on the contrary, it can be placed approximately in the area of the ventral region. To this regard, it should be pointed out that the Applicant found out that a solution different from the one of the invention, which, for example, could envisage the use of one single common ring or one single joint on each side of the dog, limits the swivelling of both straps around one single common axis, which, however, must necessarily be placed in the area of an intermediate region of the body of the dog, for example the ventral region, though limiting the degree of ability to adjust the harness to the front area of the dog. The Applicant further found out that use of four rings enabling two independent swivelling movements is particularly convenient both from a manufacturing point of view, as it is simple to be implemented relative to solution that envisage the use of rivets or pins for the creation of joints, and from the point of view of the well-being of the dog. Indeed, during the movement of the dog, the compression force exerted upon the four rings against the body is distributed and differentiated in the respective regions of the body of the dog. In this way, the solution allows manufacturers to eliminate any condition of local pressure on the side of dog, a condition that could occur, for example, if the rings were replaced by metal rivets or pins.

Finally, it is clear that the pet harness described and shown herein can be subject to changes and variations, without for this reason going beyond the scope of protection of the invention defined in the appended claims.

## Claims

1. A domestic pets harness (1) designed to be connected to a lead (50), said harness (1) comprising:
- a pair of plate like side elements (2) designed to be arranged in contact with the upper part of the sides of the animal;
- a front strap (3) which extends from one plate like side element (2) to the other, so as to secure the front part of the animal;
- a ventral strap (4) which extends from one plate like side element (2) to the other, so as to wrap up the ventral part of the animal;
- upper connection means (5) which are placed above the dorsal region of the animal and are structured to connect one plate like side element (2) to the other;
said harness (1) being **characterised in that** each end of the front strap (3) and the ventral strap (4) is separately connected to the corresponding plate like side element (2) by means of a respective joining ring (6) (7).

2. The harness according to claim 1, wherein each end of the front strap (3) is separately connected to the corresponding plate like side element (2), by means of a first corresponding joining ring (7), in a first fastening position (2a); each end of the ventral strap (4) being connected to the corresponding plate like side element (2) by means of a second respective joining ring (6) in a second fastening position (2b) spaced from said first fastening position (2a) of the front strap (3), alongside of the said first joining ring (6).

3. The harness according to claim 1 or 2, wherein each said plate like side element (2) is approximately shaped to form a triangle and has an upper vertex (2c) and two lower vertexes (2a) (2b) spaced from one another;
each end of the ventral strap (4) being connected to the corresponding plate like side element (2) in a second lower vertex (2b) through the said second joining ring (6) so as to allow the ventral strap (4) to swing around a first axis (A) ; each end of the front strap (3) being connected to a first lower vertex (2a) of the corresponding plate like side element (2) spaced from said second lower vertex (2b), through the said first joining ring (7) so as to allow the front strap (3) to swing around a second axis (B) spaced from said first axis (A).

4. The harness according to any one of the previous claims, wherein said ventral strap (4) comprises a tape (10), an adjusting buckle (13) installed sliding on the tape (10) and designed to adjust the length thereof; and a tubular sleeve (15) made of a soft material which externally covers said tape (10) and is shaped so as to be able to internally house, at one end, said adjusting buckle (13).

5. The harness according to any one of the previous claims, wherein said front strap (3) comprises a tape (20), at least one adjusting buckle (23) installed in a sliding manner on the tape (20) and designed to adjust the length thereof, and a tubular sleeve (25) that covers said tape (20) and is shaped so as to be able to internally house, at one end, at least one said adjusting buckle (23).

6. The harness according to claim 5 wherein said tubular sleeve (15) (25) is made of a soft material.

7. The harness according to claim 5 or 6, wherein said tubular sleeve (15) (25) comprises at one end an internal pocket shaped for housing an adjustment buckle (13) (23).

8. The harness according to any one of the previous claims, wherein each of said joining rings (6) (7) engage in a sliding manner, a hollow eyelet at one end of a strip portion (9) (21) which has an opposite end stably connected to one said plate like side element (2).

9. The harness according to any one of the previous claims, comprising a pair of upper rings (31), each of which is engaged in a sliding manner from a corresponding strip portion (30) which has an opposite end stably connected to the upper vertex (2c) of a respective plate like side element (2); said upper connection means (5) comprising an upper strap (33) which extends above the dorsal region of the animal, and it passes through the two upper rings (31) and through a connecting ring (35) adapted to be connected to a lead (50).

10. The harness according to any one of the previous claims, wherein each plate like side element (2) comprises two lower edge (2da) which extend underneath the said joining rings (6) (7) so as to be interposed between the latter and the body of the animal.
